# DEMANDE DE BREVET EUROPEEN

(11) **EP 1 087 608 A1**
(43) Date de publication de la demande: **28.03.2001**
(21) Numéro de dépôt: 00402617.5
(22) Date de dépôt: 21.09.2000
(51) Int. Cl.: H04N 1/00, H04N 1/327

(54) **Ensemble d'équipements de transmission de données comportant un indicateur de double appel**

(30) Priorité: 23.09.1999 FR 9911881
(71) Demandeur: SAGEM SA, 75116 Paris (FR)
(72) Inventeur: Ardin, Christian, 27860 Hendicourt (FR)
(74) Mandataire: Bloch, Gérard

(57) **Abrégé**

L'ensemble d'équipements de transmission de données comporte un terminal (1) de transmission de données informatiques et un terminal télécopieur (10) avec des circuits (21) de raccordement des deux terminaux (1, 10) à une ligne commune (30) d'un réseau téléphonique associés à des circuits (11, 12, 13) de réception et d'analyse de signaux de la ligne (30), les circuits de réception et d'analyse (11, 12, 13) étant sensibles à des signaux de double appel (41, 42) et commandant des organes (4, 14, 15) indicateurs de double appel, les circuits de raccordement (21) reliant à la ligne, concomitamment, le terminal de transmission de données (1) par une liaison téléphonique et le terminal télécopieur (10) par une liaison (17, 33) de surveillance des signaux de ligne.

## Description

La présente invention concerne l'exploitation, par l'utilisateur d'un ordinateur personnel, ci-après désigné PC, des services téléphoniques du réseau téléphonique commuté RTC.

Le réseau RTC est maintenant couramment utilisé pour relier un PC à un fournisseur d'accès à un réseau informatique tel que l'INTERNET. Compte tenu du faible coût de l'INTERNET et de la communication RTC locale, le PC peut rester connecté longtemps à l'INTERNET.

Considérons le cas domotique où la ligne RTC est commune au PC et au poste téléphonique de l'utilisateur. Alors, si un poste téléphonique extérieur appelle l'abonné, celui-ci n'est pas prévenu de l'appel dans le cas d'une communication informatique par son PC. Bref, la communication avec l'INTERNET isole l'abonné RTC des autres utilisateurs du téléphone. Ceci constitue un inconvénient.

Pour indiquer à un abonné, dont le poste téléphonique est décroché, qu'un appel entrant est en attente, RTC offre le service de double appel. Ce service consiste à transmettre au poste appelé une signalisation spécifique pour que l'abonné puisse alors choisir de prendre l'appel en attente, après consultation éventuelle du numéro du poste appelant qui est transmis par le RTC et affiché sur le poste si un tel service supplémentaire d'identification de l'appelant est prévu et possible. On peut bénéficier de ce service avec un téléphone ou un télécopieur.

AU 696 782 A enseigne un modem d'un PC, associé à un poste téléphonique, modem qui sert à la fois aux échanges de données du PC et à la détection de signaux de double appel, pour alors connecter aussi à la ligne le poste téléphonique ou encore un télécopieur.

Cependant, dans le cas du télécopieur, le modem, qui est resté relié à la ligne par une liaison téléphonique, est susceptible de perturber les échanges de données sur la liaison téléphonique du télécopieur.

La présente invention vise à éviter cet inconvénient.

A cet effet, l'invention concerne un ensemble d'équipements de transmission de données, comportant un terminal de transmission de données informatiques et un terminal télécopieur avec des moyens de raccordement des deux terminaux à une ligne commune d'un réseau téléphonique associés à des moyens de réception et d'analyse de signaux de la ligne, les moyens de réception et d'analyse étant sensibles à des signaux de double appel et agencés pour commander des moyens indicateurs de double appel, caractérisé par le fait que les moyens de raccordement sont agencés pour relier à la ligne, concomitamment, le terminal de transmission de données par une liaison téléphonique et le terminal télécopieur par une liaison de surveillance des signaux de ligne.

Ainsi, le terminal télécopieur peut surveiller la ligne et commander les moyens indicateurs de double appel, sans devoir alors être relié à la ligne par une liaison téléphonique.

L'invention sera mieux comprise à l'aide de la description suivante d'une forme de réalisation préférée de l'ensemble d'équipements de l'invention, en référence au dessin annexé, sur lequel :
- la figure 1 représente un tel ensemble, comportant un PC et un télécopieur reliés à une ligne téléphonique commune, et
- la figure 2 illustre, en fonction du temps t, l'état de la ligne et de signaux de signalisation sur celle-ci.

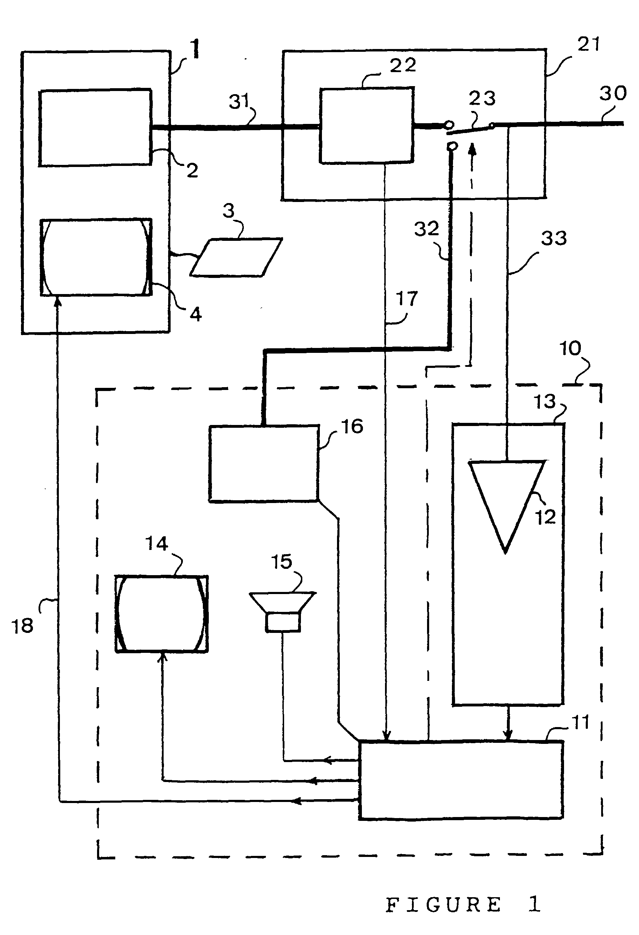

L'ensemble de la figure 1 comporte un PC 1 et un télécopieur 10 raccordés chacun à une ligne 30 du réseau téléphonique commuté RTC par des circuits de raccordement 21.

Outre un clavier 3 et un écran 4, le PC 1 comporte des circuits 2 de prise de ligne et d'échange de données avec la ligne 30, par un modem, reliés à un tronçon extrémal 31 de la ligne RTC 30. En variante, les circuits 2 pourraient être à l'extérieur du PC 1, dans un coffret de raccordement, comportant éventuellement les circuits de raccordement 21.

Le télécopieur 10 comporte un banc de filtres 13 relié en sortie à un microprocesseur 11 de traitement de signaux de ligne, commandant un afficheur 14 et un buzzer 15. Le banc de filtres 13 comporte dans cet exemple, en tête, un circuit 12 à entrée haute impédance, ici un amplificateur opérationnel, relié par une liaison de surveillance 33 à la ligne 30. Par haute impédance, on entend une impédance bien plus élevée (10 k ohm par exemple) que l'impédance caractéristique de la ligne téléphonique 30, qui est de 600 ohms. Dans cet exemple, le télécopieur 10 est en outre relié au PC 1 par une liaison 18 permettant au microprocesseur 11 de commander l'écran 4 du PC 1. La représentation de la figure 1 est, dans un but de clarté, très schématique puisque cette commande est en réalité transmise à travers un port d'entrée du PC 1, relié à une carte de commande de l'écran 4 dans le PC 1. Le télécopieur 10 comporte en outre des circuits à modem 16, de prise de ligne et de numérotation, reliés au microprocesseur 11.

Les circuits de raccordement 21 comportent, dans cet exemple, un circuit ampèremétrique aval 22 monté en série dans une liaison 2 fils reliant la ligne 30 à son tronçon d'extrémité 31 de raccordement du PC 1. Cette même liaison 2 fils comporte, côté ligne 30, un relais inverseur amont 23 à deux lames mobiles (une seule est représentée) pour, dans une position repos, relier les deux fils de ligne 30 au tronçon 31 et pour, dans l'autre position, travail, relier la ligne 30 à un autre tronçon d'extrémité de ligne 32 auquel sont raccordés les circuits 16 de prise de ligne et de numérotation. Une sortie de mesure du circuit ampèremétrique 22 est reliée, par une liaison 17, au microprocesseur 11. Ce dernier commande la bobine du relais 23 par la liaison en ligne en pointillés. Comme le montre la figure 1, les circuits de raccordement 21 permettent de relier à la ligne 30, concomitamment, le PC 1, par une liaison téléphonique empruntant le tronçon 31, et le télécopieur 10 par les liaisons 17, 33 de surveillance des signaux de lignes, en continu et en alternatif dans cet exemple.

Le fonctionnement des circuits de la figure 1 va maintenant être expliqué plus en détails.

Tout d'abord, le télécopieur 10 peut fonctionner de façon classique, le relais 23 venant en position travail pour que les circuits de prise de ligne 16 puissent prendre la ligne 30 pour émettre des données de télécopie ou pour recevoir un appel entrant et y répondre.

Dans la configuration d'exploitation qui nous intéresse dans le cadre de l'invention, c'est le PC 1 qui occupe la ligne 30 pour des échanges de données avec un autre équipement informatique, par exemple un serveur de l'Internet.

Dans cette configuration, le relais 23 occupe sa position repos et relie donc la ligne 30 au tronçon 31. Le PC 1 dispose donc de la ligne 30 en l'absence de commande contraire du télécopieur 10.

Lorsque le PC 1 prend la ligne 30, par commande depuis son clavier 3 par exemple, les circuits de ligne 2 bouclent la ligne 30 et un courant continu provenant du central RTC de raccordement de la ligne 30 traverse le circuit ampèremétrique 22.

Le microprocesseur 11 reçoit alors de celui-ci, par la liaison 17, des signaux de mesure de courant continu, ou au moins d'indication de détection d'un courant continu de bouclage dépassant un seuil bas, et détermine ainsi que la ligne 30 est bouclée, dont occupée, par le PC 1. Dans cette situation, le télécopieur 10 informe l'utilisateur du PC 1 de l'arrivée de signaux de double appel par la ligne 30, si un tel cas se présente, signaux indiquant qu'un appel téléphonique entrant est en attente dans le RTC pour joindre le télécopieur 10 ou tout autre terminal qui serait relié à la ligne 30. Cela peut même être un appel d'un nouveau correspondant à destination du PC 1.

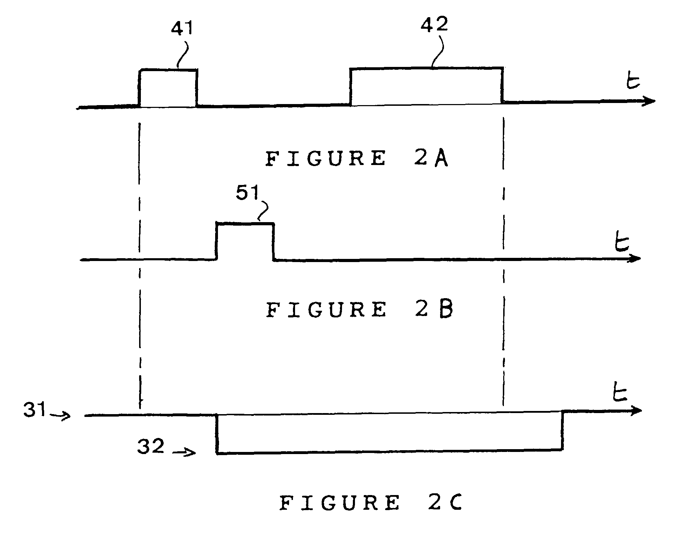

D'une façon générale, le réseau RTC signale l'existence d'un double appel par l'envoi d'un signal électrique de courte durée 41 (fig. 2A) à une fréquence audible déterminée, qui est transformé en signal sonore, ou "bip", caractéristique d'une tonalité de double appel, lorsqu'il est reçu par un poste téléphonique. Ce dernier peut en outre recevoir, du RTC, des signaux ou données d'identification 42 spécifiant le numéro de l'appelant.

Dans le cas présent, comme le PC 1 ne peut détecter ni le "bip" 41 ni le numéro de l'appelant 42, c'est le télécopieur 10 qui signale au moins l'existence du double appel et même, dans cet exemple, qui indique le numéro appelant.

Pour cela, le banc de filtres 13 est réglé pour détecter la tonalité de double appel 41 et le microprocesseur 11 vérifie simplement ici qu'elle a une durée effective compatible avec celle prévue, afin d'éliminer les parasites.

La présence de l'amplificateur opérationnel 12 à haute impédance d'entrée, d'écoute ou surveillance de la ligne 30, limite l'énergie électrique prélevée en ligne 30 par les filtres 13 et évite ainsi d'atténuer sensiblement les signaux de ligne du PC 1.

On remarquera que le banc de filtres 13 pourrait, en variante, être branché en aval des circuits de raccordement 21, sur le tronçon 31 réservé au PC 1. Dans ce cas, le circuit ampèremétrique 22 pourrait être omis, puisque la présence de la tonalité de double appel sur le tronçon 31 indiquerait, à elle seule, que le relais 23 est en position repos et que le PC 1 occupe effectivement la ligne 30, puisqu'il y a double appel.

De même, en variante, une mesure de la tension continue de polarisation de la ligne 30 fournie par le central RTC de rattachement, par un circuit voltmétrique des circuits de raccordement 21, permettrait de détecter un bouclage de prise de ligne, se traduisant par une chute de la tension de polarisation, représentant son état d'occupation. En pareil cas, le circuit ampèremétrique 22 pourrait être omis. Le microprocesseur 11, connaissant l'état actif ou non des circuits de prise de ligne 16 du télécopieur 10, pourrait donc en déduire l'état actif ou non des circuits de prise de ligne 2 du PC 1. Pour détecter l'occupation de la ligne 30 par le PC 1, il peut encore être prévu un détecteur de signaux alternatifs branché comme le jeu de filtres 13 et constituant un filtre passe-bande, à large bande pour détecter tous les signaux échangés par le modem du PC 1.

La figure 2A représente des signaux de ligne, de signalisation de double appel. Le signal 41 d'indication de double appel est détecté après analyse par le microprocesseur 11 comme expliqué ci-dessus, cette détection étant un événement ici représenté très schématiquement sous la forme d'une impulsion 51 (fig. 2B). Comme évoqué plus haut, dans une exploitation minimale, le microprocesseur 11 indique simplement à l'utilisateur du PC 1 l'arrivée de cet événement, par affichage d'un message correspondant sur l'afficheur 14 et/ou actionnement du buzzer 15. Cette indication peut de même être effectuée par affichage d'un message sur l'écran 4 du PC 1, ou commande de même d'un buzzer du PC 1, en particulier, dans ces deux derniers cas, si le PC 1 et le télécopieur 10 sont à distance l'un de l'autre. L'utilisateur du PC 1, ainsi averti par le ou les indicateurs de double appel ci-dessus, peut alors choisir de libérer la ligne 30 pour que l'appel en attente puisse parvenir aux deux appareils 1, 10.

Dans l'exploitation complète des signaux de double appel, le microprocesseur 11 détecte aussi le numéro de l'appelant, référencé 42, transmis par le RTC. Dès qu'il détecte le signal de "bip" 41, le microprocesseur 11 commande à cet effet le relais 23 pour renvoyer, ou aiguiller, temporairement la ligne 30 sur le tronçon 32 et donc les circuits de ligne 16 du télécopieur 10 (état bas sur la fig. 2C). Le relais 23 renvoyant ainsi temporairement la ligne 30 sur exclusivement le télécopieur 10, le PC 1 est donc isolé de la ligne 30 et les signaux 42 d'identification de l'appelant peuvent ainsi être reçus sans perturbation par le télécopieur 10, dont le modem des circuits de ligne 16, qui ont pris la ligne renvoyée 32, démodule les signaux d'identification 42 ainsi reçus et les transmet au microprocesseur 11.

En variante, les circuits de ligne 16 pourraient simplement prendre la ligne renvoyée 32, pour maintenir la liaison téléphonique, le banc de filtres 13 et le microprocesseur 11 effectuant la réception et la démodulation des signaux d'identification 42.

Comme le montre la figure 2C, la ligne 30 est à nouveau renvoyée sur le tronçon 31 du PC 1 après réception des signaux d'identification 42. Ceux-ci sont alors affichés sur l'afficheur 14 et/ou l'écran 4. Cet affichage peut suffire en lui-même, puisqu'il constitue à la fois la signalisation de l'existence d'un double appel et l'indication de l'identité de l'appelant. Le renvoi temporaire de la ligne 30 (fig. 2C) peut être commandé et annulé par le microprocesseur 11 ou bien il pourrait seulement être commandé par celui-ci. Dans ce dernier cas, un circuit monostable, interposé entre le microprocesseur 11 et le relais 23, commanderait lui-même le retour à la position repos du relais 23 après un délai suffisant pour recevoir les signaux d'identification 42.

Compte tenu du fait que les échanges de données du PC 1 à travers le RTC sont en général en mode paquet, la brève coupure de ligne (fig. 2C) qu'il subit est insuffisante pour provoquer une rupture logique de la communication avec l'équipement correspondant.

En variante, il peut être prévu d'intégrer dans le télécopieur 10 les circuits de raccordement 21 et éventuellement les circuits de ligne 2 de raccordement du PC 1. Dans ce dernier cas, les circuits 2 et 16 peuvent être fondus en un seul ensemble à utilisation partagée entre le télécopieur 10 et le PC 1, relié à cet ensemble de raccordement par une liaison locale de données. Le télécopieur 10 constitue alors un terminal de raccordement au RTC de terminaux informatiques classiques.

## Revendications

1. Ensemble d'équipements de transmission de données, comportant un terminal (1) de transmission de données informatiques et un terminal télécopieur (10) avec des moyens (21) de raccordement des deux terminaux (1, 10) à une ligne commune (30) d'un réseau téléphonique associés à des moyens (11, 12, 13) de réception et d'analyse de signaux de la ligne (30), les moyens de réception et d'analyse (11, 12, 13) étant sensibles à des signaux de double appel (41, 42) et agencés pour commander des moyens (4, 14, 15) indicateurs de double appel, caractérisé par le fait que les moyens de raccordement (21) sont agencés pour relier à la ligne (30), concomitamment, le terminal de transmission de données (1) par une liaison téléphonique et le terminal télécopieur (10) par une liaison (17, 33) de surveillance des signaux de ligne.

2. Ensemble selon la revendication 1, dans lequel les moyens de raccordement (21) sont agencés pour être montés en série, entre la ligne (30) et le terminal de transmission de données informatiques (1), et pour détecter un courant continu de bouclage de la ligne (30).

3. Ensemble selon la revendication 1, dans lequel les moyens de réception et d'analyse (11, 12, 13) sont agencés pour détecter, sous haute impédance d'entrée, des signaux de tension de la ligne (30) représentatifs de son occupation.

4. Ensemble selon l'une des revendications 1 à 3, dans lequel les moyens de raccordement (21) sont agencés pour isoler de la ligne (30) le terminal de transmission de données informatiques (1), sous la commande des moyens de réception et d'analyse (11, 12, 13).

5. Ensemble selon la revendication 4, dans lequel les moyens de raccordement (21) sont agencés pour renvoyer temporairement la ligne (30) sur exclusivement le télécopieur (10).

6. Ensemble selon l'une des revendications 1 à 5, dans lequel les moyens indicateurs (4, 14, 15) comportent des moyens de signalisation sonore (15).

7. Ensemble selon l'une des revendications 1 à 6, dans lequel les moyens indicateurs comportent des moyens (14) d'affichage d'un message d'indication de double appel.

8. Ensemble selon l'une des revendications 1 à 7, dans lequel les moyens de réception et d'analyse sont agencés pour commander un écran (4) du terminal de transmission de données informatiques (1).
